# EUROPEAN PATENT SPECIFICATION

(11) **EP 2 816 227 B1**
(45) Date of publication and mention of the grant of the patent: **02.11.2016**
(21) Application number: 14168806.9
(22) Date of filing: 19.05.2014
(51) Int. Cl.: F03D 80/00, B29C 70/48, B29C 65/48, B29C 65/00, F01D 5/14, F03D 1/06, B29L 31/08

(54) **Wind turbine blade with extended shell section**
Windturbinenschaufel mit erweitertem Schalenteil
Pale d'éolienne avec partie de coque étendue

(30) Priority: 17.06.2013 DK 201370323
(43) Date of publication of application: 24.12.2014
(73) Proprietor: Envision Energy (Denmark) ApS, 8600 Silkeborg (DK)
(72) Inventor: Ruijter, Wout, 8600 Silkeborg (DK)
(74) Representative: Gregersen, Niels Henrik

(56) References cited:
- EP-A1- 1 314 885
- EP-A1- 1 695 813
- EP-A1- 2 647 835
- DE-B3- 19 580 147
- US-A1- 2004 115 060
- US-A1- 2009 269 198
- US-A1- 2011 018 282

## Description

### Field of the Invention

The present invention relates to a wind turbine comprising:
- a wind turbine tower having a top;
- a nacelle coupled to the top of the wind turbine tower, e.g. via a yaw system;
- a rotor hub rotatably mounted to the nacelle;
- one or more wind turbine blades having a tip end located in the opposite end of a blade root configured to be mounted to the rotor hub, where the wind turbine blade comprises a pressure side connected to a suction side via a leading edge, wherein the wind turbine blade further comprises a first shell part having a first trailing edge connected to a first inner surface facing a second shell part, wherein the second shell part has a second trailing edge connected to a second inner surface facing the first shell part, wherein one of the two shell parts comprises an extended shell section where the trailing edge of the other shell part is coupled to the inner surface of that shell part, e.g. via a glue line.

The present invention also relates to a manufacturing method for a wind turbine blade where the method comprises the steps of:
- arranging a first set of layers in a first mould, where the layers form a laminate defining a first shell part comprising a first inner surface connected to a first outer surface via a first and a second edge;
- arranging a second set of layers in a second mould, where the layers form a laminate defining a second shell part comprising a second inner surface connected to a second outer surface via a third and a fourth edge;
- infusing a resin, e.g. epoxy, into the laminates using an external infusion system, e.g. a vacuum infusion system, and curing the infused laminates, and removing the external infusion system.

### Background of the Invention

The development of more cost-effective wind turbines means that the size and height of wind turbines today have increased. The size of wind turbine blades today has also increased which in turn also increases the production costs as the design of an effective blade becomes more and more difficult. Therefore, there is a need for improving the aerodynamic shape and structural strength of wind turbine blades, as well as optimising the production of such blades.

Wind turbine blades typically comprise two shell parts which are reinforced by using internal reinforcement structures. Shear webs are most commonly used for this. The two shell parts are typically formed in separate moulds where load carrying members, such as spar caps, are integrated into the shell parts either as pre-made parts or formed during the shell layup process. When combining the two shell parts in a gluing process, the shear webs are added in between and glued and cured in the same step. The shape and internal structure of a wind turbine blade is generally designed so that the resulting turbine has a low cost of energy in a particular target market (wind range and environmental requirements), which makes the design a trade-off between power production, structural mass and cost, induced loads, noise and transport considerations.

US 2007/0098561 A1 discloses a wind turbine blade having an upper shell part and a lower shell part where the trailing edge of the lower shell part is placed in a retracted position and glued to the inner surface of the upper shell part. The purpose of this configuration is to reduce the noise generated at the trailing edge which is achieved by retracting the trailing edge of the lower shell part relative to that of the upper shell part so the trailing edge thickness of the blade profile is defined only by the laminate thickness of the upper shell part. This extended trailing edge forms a thin and narrow profile having a width of no more than a few centimetres and a thickness of less than a few millimetres. The reduced trailing edge thickness is designed to reduce noise, but the limited width of the region will make it too stiff to significantly deform under loading, hence it should have a limited effect on the lift coefficient of the blade profile.

US 2011/0018282 A1 discloses a similar solution in which the wind turbine blade has an integrated extended shell part with a serrated profile specially optimised for noise reduction. This also forms a stiff narrow profile having a limited effect of the lift coefficient as mentioned above.

It is known to attach a trailing edge extender in the form of a tape to the wind turbine blade, where the profile of this trailing edge extender is designed to reduce noise. US 2012/0134817 A1 discloses such a tape that is mounted to the trailing edge on site. The tape is so flexible that it has no capacity to redirect the air flow passing over the blade, and hence it has no impact on the lift coefficient of the blade profile.

Another solution is to arrange one or more active control flaps or DTEF in the trailing edge where the operation of these flaps is controlled by a control system integrated into the wind turbine blade or the nacelle; such a solution is known from Risoe DTU and WO 2008/131800 A1. Such systems are shown to have significant potential to reduce wind blade and wind turbine loads. However, such a system requires flaps or deformable elements to be incorporated into the trailing edge of a wind turbine blade, and also sensors and actuators controlling the flaps or deformable elements to be integrated into the blade profile. This adds to the complexity of the structure making it more fragile and susceptible to dirt, lightning damage and moisture. Furthermore, such flaps or trailing edge require a separate active control system which in turn increase the production costs.

EP 1314885 A1 discloses a wind turbine blade where a panel of polycarbonate is mounted to the pressure side. The stiffness characteristic of the panel is selected so that it is able to flex towards the suction side at increasing wind speeds.

US 2004/0115060 A1 discloses a flap comprising at least two layers of materials having different temperature coefficients so that it is able to flex at increasing temperatures. The flap is mounted on the trailing edge of the wind turbine blade by means of glue or screws.

DE 19580147 B3 discloses a trailing edge element glued to the trailing edges of the two aerodynamic shell parts wherein the trailing edge element is made of an elastomeric material capable of deforming due to the pressure difference between the pressure side and the suction side.

### Object of the Invention

An object of this invention is to provide a wind turbine blade with improved blade profile characteristics.

An object of this invention is to provide a wind turbine blade with integrated passive load alleviation functionality.

An object of this invention is to provide a manufacturing process for a wind turbine blade with integrated passive load alleviation functionality that does not add steps to the manufacturing process or components to the wind turbine blade.

### Description of the Invention

An object of the invention is achieved by a wind turbine characterised in that:
- the extended shell section is configured as a flexible shell section for passive load reduction where the first trailing edge is configured to move from a first position to a second position in a direction towards the suction side relative to the first leading edge when an incoming wind is acting on the pressure side of the wind turbine blade, and
- wherein the chord of the wind turbine blade has a relative length of 1 and the extended shell section has a relative width of at least 0.10.

This provides a wind turbine blade with an improved blade profile where the extended shell section defines the trailing edge of the blade profile. The extended shell section allows the lift of the wind turbine blade to be optimised since it provides an extended trailing edge that is wider than the traditional trailing edge disclosed in US 2007/0098561 A1. The extended shell section has a configuration which enables it to flex or move in response to changes in the air flow velocity. The term "flexible" is defined as a shell section having a free end defining the trailing edge of the wind turbine blade which is able to flex or move relative to the leading edge of the wind turbine blade. The movement may be defined as the angular displacement between the chord in a first position and in a second position and/or as a reduction in the maximum distance between the mean camber line and the chord. The chord is defined as the line that extends through the leading edge and the outermost trailing edge of the wind turbine blade. In case of a flat-back profile with non-zero trailing edge thickness, the trailing edge point is defined as the middle of the trailing edge.

This allows the free end, i.e. the outermost trailing edge, to flex in a substantially radial direction relative to the fixed end, i.e. the retracted trailing edge. The flexing increases as the angle of attack increases. This means that an increased aerodynamic load, e.g. in the event of a gust hitting the wind turbine, can deform the profile such that the lift coefficient is reduced, thereby lowering the loads. This configuration provides a mechanism that creates passive load alleviation at variable wind speeds. This trailing edge configuration provides a method for passively controlling the lift of the wind turbine blade and avoids extra components and risk associated with active lift control.

The extended shell section may have a thickness which more or less corresponds to the thickness of the laminate forming that shell section. The laminate may have a thickness of up to 3 mm, preferably tapered down to 2 mm or 1 mm in the extended part. The laminate may be made of fibre reinforced plastics or composites in which the fibres are organic fibres or made of glass or carbon. The fibres may be infused with a resin, such as epoxy. The extended profile allows an effective assembly process that only requires a minimum of manual grinding or polishing around the glued region.

According to a specific embodiment, the extended shell section has a relative width between 0.10 and 0.30.

Unlike a sharp narrow trailing edge for noise reduction, as disclosed in US 2007/0098561 A1, this extended section is specifically designed to have significant flexibility. The relative width of the extended shell section may preferably be between 0.10 and 0.30, preferably between 0.15 and 0.25, e.g. 0.20 measured between the innermost and outermost trailing edges. This means that the free end, i.e. the outermost trailing edge, is able to move or rotate in a substantially radial direction relative to the substantially stationary end, i.e. the innermost trailing edge, and thus the leading edge. The extended shell section may be made of a material or laminate having a lower stiffness than the remaining profile of the wind turbine blade. This allows it to flex without cracking or breaking. The width, thickness and/or shape of the extended shell section may be optimised according to the aerodynamic profile of the blade.

According to one embodiment, the wind turbine blade has a relative length of 1 measured between the blade root and the tip end and the extended shell section is located towards the tip end, wherein the extended shell section has a starting point facing the blade root and an end point facing the tip end, where the starting point is preferably located at a relative distance of 0.60 or more from the blade root.

The best effect is achieved if the extended shell section is located towards the tip end of the wind turbine blade where the spar cap may be wide relative to the chord length. This allows the extended shell section to be located where the spar cap carries the edgewise and flapwise loads. The starting point of the extended shell section may be located within a relative distance of 0.40 or 0.30 from the tip end or greater than a relative distance of 0.60 or 0.70 from the root end. The end point of the extended shell section may be located at or adjacent to the tip end. The extended shell section may have a relative length of 0.40 or less, preferably 0.30 or less.

According to a specific embodiment, the relative width of the extended shell section increases gradually from the starting point in a direction towards the tip end until an intermediate point, after which the extended shell section maintains its maximum relative width, preferably the slope of the increasing extended shell section between these two points is between 1:5 and 1:15.

This allows the starting end of the extended shell section to form a smooth transition that is gradually introduced along the length of the wind turbine blade, and allowing the load transfer in the blade to remain smooth. The extended shell section may at the other end also be shaped to form a smooth transition that tapers off from a second intermediate point and towards the tip end. The slope at the starting end may be selected based on the width of the extended shell section and the length between the starting point and the intermediate point. The slope may be between 1:5 and 1:15, preferably 1:10. The starting end and/or the opposite end may have a stepped shape with one or more steps or a curved shape.

According to one embodiment, the chord of the wind turbine blade is configured to move within a maximum angular interval of ±5 degrees, preferably ±2 degrees, between the first position and the second position, and where the angular rotation is measured relative to the leading edge of the wind turbine blade.

The extended shell section may be configured to flex or rotate between an initial shape where there is minimum loading on the extended section, e.g. corresponding to low wind speeds, and a significantly deformed shape, e.g. corresponding to higher wind speeds and/or gust loads. The lift coefficient of the blade is reduced as the extended shell section flexes towards the suction side due to the increased pressure on the pressure side. This means that the lift is reduced at high wind speeds and increased at low wind speeds. The extended shell section may have a straight profile where the pressure on the pressure side attempts to bend the profile towards the suction side. The extended shell section may have a curved profile having an inscribed circle facing the pressure side where the pressure on the pressure side attempts to straighten out the curved profile. The extended shell section may alternatively flex even more than the 5 degrees depending on the desired angle of attack, e.g. up to 20 degrees or even 30 degrees, in a positive or negative direction.

The flap behaviour may alternatively or additionally be characterised in terms of the reduction of the maximum distance between the camber line and the chord line. This allows the measurement of the maximum allowable deformation of the extended shell section to be adapted to the desired profile of the wind turbine blade. The change in the maximum camber may be 100% or more depending on the cross-sectional profile of the wind turbine blade.

According to one embodiment, the extended shell section forms part of the shell part forming the pressure side or the shell part forming the suction side.

This allows the extended shell section to be manufactured in the same manufacturing step as the upper or lower shell part without adding components to the wind turbine blade. This eliminates the need for additional manufacturing steps for attaching the extended shell section to the shell part. The support of the moulds in which the two shell parts are located may be used to apply pressure to the glue line between the inner surface of the extended shell part and the trailing edge of the other shell part in order to ensure a strong connection between the two shell parts.

According to one embodiment, the profile of the extended shell section is further configured for noise reduction, e.g. comprises a noise reducing profile arranged at the outermost trailing edge of the extended shell section which differs from the profile at the innermost trailing edge of the extended shell section.

This provides an extended shell section that alternatively or additionally is configured for noise reduction where the noise reducing profile is integrated into the shell part instead of being provided in a separate piece mounted to the shell part. The noise reducing profile may extend for the entire width between the two trailing edges or only a portion thereof.

According to one embodiment, the outermost trailing edge of the noise reducing profile forms a serrated edge, a sinus shaped edge, or a stepped edge, wherein two adjacent peaks of that edge face in opposite directions and are preferably arranged in-plane or out-of-plane relative to the profile of the extended shell section.

The noise reduction profile may form a planar surface in the length wise direction of the wind turbine blade. The outermost trailing edge may be shaped as a straight edge or an in-plane serrated edge. The noise reducing profile may instead form an out-off-plane sinus or sawtooth shaped surface where the curvature or amplitude tapers off from the outermost trailing edge towards the innermost trailing edge. The curvatures or teeth may have a predetermined amplitude and frequency. This provides a more flexible profile of the extended shell section than if it had a straight planar profile. Instead of curves or teeth, the noise reducing profile may have a plurality of individual areas that are offset relative to each other, e.g. one area that is offset towards the pressure side and an adjacent area that is offset towards the suction side. The areas may have a predetermined maximum offset and length. The areas may extend in a direction parallel to the chord and may be placed in a predetermined positive or negative angle relative to the innermost trailing edge. The transition between each of the areas may form a planar surface placed in an angle between 0 to 90 degrees relative to the surface of an adjacent area. The transition may instead form a curved surface and thereby providing a smooth transition.

According to one embodiment, the extended shell section comprises a laminate of at least two layers comprising a plurality of fibres wherein the fibres in one of the layers are arranged in a first axial direction, e.g. +45 degrees, relative to the length of the extended shell section, and the fibres in the other layer are arranged in a second axial direction, e.g. -45 degrees, relative to the length of the extended shell section.

The laminate of the extended shell section may comprise at least two layers of a fibre reinforced material, such as fiberglass, where the fibres in these layers are orientated in different axial directions relative to the longitudinal direction of the extended shell section. The fibres in these two layers are preferably arranged in a biaxial pattern of ±45 degrees, e.g. in a woven or non-woven configuration. An additional third and/or fourth layer may be arranged relative to the first two layers and the longitudinal direction of the extended shell section. The fibres in this third and/or fourth layer may be arranged in an axial direction of 90 degrees so that the laminate forms a triaxial pattern. The fibres in this third and/or fourth layer may instead be arranged in the same axial direction as the first and/or second layer. This allows the laminate to be stretched into the desired shape during the lay-up so that the layers follow the contours of the moulds and allows the strength of the profile to be increased if the layers are arranged in a non-woven configuration.

An object of the invention is also achieved by a manufacturing method for a wind turbine blade as described above and characterised by:
- applying at least one non-bonding layer to one of the two surfaces of the first shell part adjacent to one of the two edges of that shell part, where the layer is arranged to mask off a first gluing surface on that surface for gluing to a second gluing surface on the second shell part;
- applying at least one adhesive layer, e.g. glue, to the first gluing surface; and
- moving the second shell part into contact with the first shell part, e.g. placing the second shell part on top of the first shell part, so that the second gluing surface is brought into contact with the glue on the first gluing surface, wherein the non-bonding layer is located outside the enclosed area defined by the two shell parts.

This process allows a wind turbine blade to be manufactured without adding steps to the process for integrating a load alleviation profile in the wind turbine. This provides a more time-saving process since the load alleviation profile can be manufactured in the same step as one of the two shell parts. This process does not require any additional components to be coupled or mounted to the wind turbine blade after demoulding the two shell parts since the load alleviation profile is formed as an extended shell section. The process reduces the workload needed to form the desired trailing edge profile of the wind turbine blade since this trailing edge is defined by the extended shell. The glue line is shaped and/or mechanically worked into a smooth transition between the retracted shell part and the extended shell part, e.g. substantially following the curvature of the outer surface at the trailing edge.

According to one embodiment, the method comprises an additional step of:
- removing any excess adhesive, which is pressed out between the two gluing surfaces and onto the non-bonding layer, by removing, e.g. peeling off, the non-bonding layer, preferably after demoulding the two shell parts.

This process requires a minimum of manual grinding or polishing since the glued region does not have to be worked into a thin sharp trailing edge as in US 2007/0098561 A1. The glued region of US 2007/0098561 A1 still requires a certain amount of cutting or grinding to form the thin sharp profile or an added manufacturing step to form a recess in the retracted shell part since the glued region is located adjacent to the trailing edge of its extended shell. The present manufacturing process provides a glued region that only needs to form a smooth transition between the two shell parts since the gluing surfaces are spaced apart from the trailing edge of the wind turbine blade.

Any excess glue is removed right after demoulding the two shell parts, preferably before the glue has cured completely. If the mould of the retracted shell part does not extend further than the retracted trailing edge, the excess glue may be removed by simply wiping or scraping it off. If the mould of the retracted shell part extends further than the retracted trailing edge, then a second non-bonding layer may be arranged on the outer surface of this extended mould section or the non-bonding layer used to line the mould may be extended to also line this mould section. The term "non-bonding" is defined as a layer that does not adhere or bond to the resin or laminate layers of the shell. This allows the excess glue to be easily removed by cutting or braking it off since it has a very thin and narrow surface to bond to, i.e. the thickness of the retracted trailing edge. Normally any excess glue is not removed until after the entire wind turbine blade has been assembled which then requires a greater workload to remove it by using a cutting tool and/or a grinding or sanding tool. This manufacturing process is well-situated for any wind turbine blade having an extended shell part.

A layer of a peel-ply material, e.g. a fibre reinforced fabric or nylon fabric coated with a release agent, such as Teflon™, is preferably used to mask off the first gluing surface and the extended mould section. Also other peel-ply materials may be used, such as a tightly weaved Dacron fabric or a suitable plastic material. The use of a peel-ply material allows the masking element and thus any excess glue to be removed by simply peeling off the material. The peel-ply leaves behind a smooth surface which requires a minimal of manual grinding or polishing afterwards. The peel-ply may be shaped as an elongated flat element, e.g. a tape, which may be pre-manufactured or cut to the desired width.

According to one embodiment, a deformable element, e.g. a foam element, or a second removable non-bonding layer is arranged on the opposite adjacent side of the first gluing surface before bringing the two shell parts into contact with each other.

As the two gluing surfaces are pressed together, the glue fills out the space between the two surfaces and any excess glue is pressed out onto the peel-ply layer and into the interior of the wind turbine blade. The deformable element may comprise a plurality of open or closed cells that allows the element to deform when subjected to an extern pressure. The deformable element may have a size and shape that is greater than the internal thickness and volume between the two shell parts when they are pressed together. This provides a more optimal distribution of the glue inside the wind turbine blade, as the glue will form a curved surface with the curvature facing towards the trailing edges. This allows the loads and stresses to follow the curvature of the inner surfaces of the shell parts. The glue preferably has a high viscosity and a high bonding capacity to the laminate, e.g. epoxy and/or the materials forming the layers. Alternatively, a second non-bonding layer of a peel-ply material may be used to remove any excess glue from the interior of the wind turbine blade.

According to a specific embodiment, at least one of the moulds comprises at least one protrusion defining a lay-up marking, where one of the edges, e.g. the trailing and/or leading edge, of the laminate is arranged adjacent to the protrusion, or wherein a second element, e.g. a deformable element, is arranged on one of surfaces of the two moulds for masking off the second gluing surface before bringing the two shell parts into contact with each other.

An elongated protrusion extending along the length of the mould and outwards from the outer surface of this mould may define a marking for laying up the laminate layers. The protrusion may be positioned adjacent to the gluing surface and may optionally form a notch in the laminate extending over the protrusion. The protrusion may have a curved triangular, trapezoid or semi-circular cross-sectional profile. This allows the excess glue and/or material to be broken or cut off while leaving behind a surface that requires a minimal of manual grinding or polishing. The protrusion may be used to distribute the excess glue more evenly along the length of the wind turbine blade.

The protrusion may have a height that is equal to or less than the thickness of the laminate located at the gluing surface and optionally also at least a portion of the thickness of the glue line. A second protrusion may be arranged at the opposite edge so that the two protrusions define both the leading and trailing edges of that shell part. The protrusions may be a part of the mould or be configured as a separate element that is coupled to the mould before the laminate layers are applied to the mould. If the moulds comprises at least two opposite facing protrusions, these two protrusions may be offset relative to each other so that they define an extended shell part of one of the shell parts.

A second deformable or stiff element may be used instead to distribute the excess glue more evenly along the length of the wind turbine blade. This element may have a first contact surface for contacting the extended shell part and a second contact surface for contacting an outer surface on the mould of the retracted shell part. A third surface connected to the two contact surfaces faces the trailing edge of the retracted shell part which may be deformed towards the trailing edge when the two shell parts are pressed together. The third surface contacts the excess glue and shapes the glue line into a smooth transition. The second element may be removed after demoulding the shell parts. This may reduce the amount of mechanical work, e.g. sanding or polishing, needed afterwards.

According to one embodiment, at least a portion of the non-bonding layer is arranged between a first trailing edge of the first shell part and the first gluing surface, and where the second gluing surface is arranged adjacent to a second trailing edge of the second shell part.

This manufacturing process is well-suited for a wind turbine blade having an extended upper or lower shell part where the trailing edges of each of the two shell parts are offset relative to each other and the outermost trailing edge defines the trailing edge of the wind turbine blade. This provides a glued region that is grinded or polished from one side into a smooth transition which requires less work compared to a traditional glued trailing edge that needs to be worked from both sides into a thin sharp trailing edge. By using a peel-ply material to remove any excess glue and optionally a protrusion or second element to shape the glue line allows the amount of grinding or polishing to be reduced to a minimum.

According to one embodiment, the non-bonding layer is arranged adjacent to a first leading edge of the first shell part, and where the second gluing surface is arranged adjacent to a second leading edge of the second shell part.

The peel-ply material may also be arranged adjacent to one or both leading edges of the shell parts. The leading edge is normally formed by two mating flanges where the gluing surfaces substantially extend parallel or perpendicular to the chord of the wind turbine blade. Preferably two peel-ply materials are arranged on either side of the leading edge for allowing the excess glue to be easily removed by peeling off the material in a direction outwards from the pressure or suction side. This provides a glue line that requires a reduced amount of grinding or polishing, particularly if the peel-ply material is removed right after the shell parts have been demoulded. The amount of grinding or polishing may further be reduced if one or two protrusions is/are used to form the leading edge.

According to one embodiment, the laminate of one of the shell parts is in a section adjacent to the trailing edge of that shell part arranged for noise reduction, e.g. forms a noise reducing profile.

The laminate may additionally or alternatively be arranged at the trailing edge of the first shell part to form an extended shell section which has a noise reducing shape. The noise reducing configuration may extend from the outermost trailing edge of the first shell part to the innermost trailing edge of the second shell part or only a portion thereof. This allows not only the extended trailing edge to form part of the first shell part, but also allows the noise reducing element to form part of that shell part. This eliminates the manufacturing step of mounting a separate noise reduction device, e.g. a tape, to the trailing edge of the wind turbine blade, thus reducing the total manufacturing time.

### Description of the Drawing

The invention is described by example only and with reference to the drawings, wherein:
- Fig. 1: shows an exemplary embodiment of a wind turbine;
- Fig. 2: shows a cross-sectional profile of a conventional wind turbine blade and of a wind turbine blade according to the invention in an unloaded and loaded situation;
- Fig. 3: shows an exemplary embodiment of a wind turbine blade according to the invention seen from the suction side;
- Fig. 4: shows an exemplary embodiment of a manufacturing process for the wind turbine blade;
- Fig. 5: shows the extended shell section with a first exemplary embodiment of a noise reduction profile; and
- Fig. 6: shows the extended shell section with a second exemplary embodiment of the noise reduction profile.

In the following text, the figures will be described one by one, and the different parts and positions seen in the figures will be numbered with the same numbers in the different figures. Not all parts and positions indicated in a specific figure will necessarily be discussed together with that figure.

### Detailed Description of the Invention

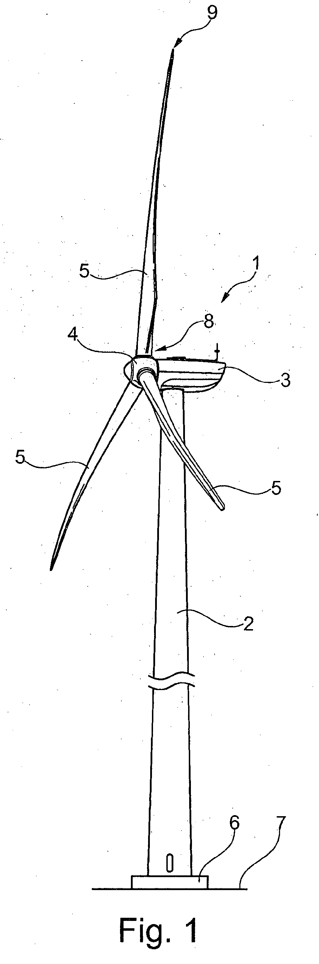

Fig. 1 shows an exemplary embodiment of a wind turbine 1 comprising a wind turbine tower 2 and a nacelle 3 mounted at the top of the wind turbine tower 2, e.g. via a yaw system. The wind turbine tower 2 may comprise one or more tower sections mounted on top of each other. A rotor hub 4 may be rotatably mounted to the nacelle 3 via a rotor shaft. One or more wind turbine blades 5 may be mounted to the rotor hub 4 extending outwards from the centre of the rotor hub. Two or three wind turbine blades 5 may be mounted to the rotor hub 4 so that they form a rotor plane. The wind turbine tower 2 may be mounted onto a foundation 6 extending above a ground level 7.

The wind turbine blade 5 may comprise a blade root 8 configured to be mounted to the rotor hub 4. The wind turbine blade 5 may comprise a tip end 9 arranged at the free end of the blade 5. The wind turbine blade 5 may have an aerodynamic profile along the length of the blade. The wind turbine blade 5 may comprise a number of support structures, e.g. spar caps and shear webs, arranged along the length of the aerodynamic profile.

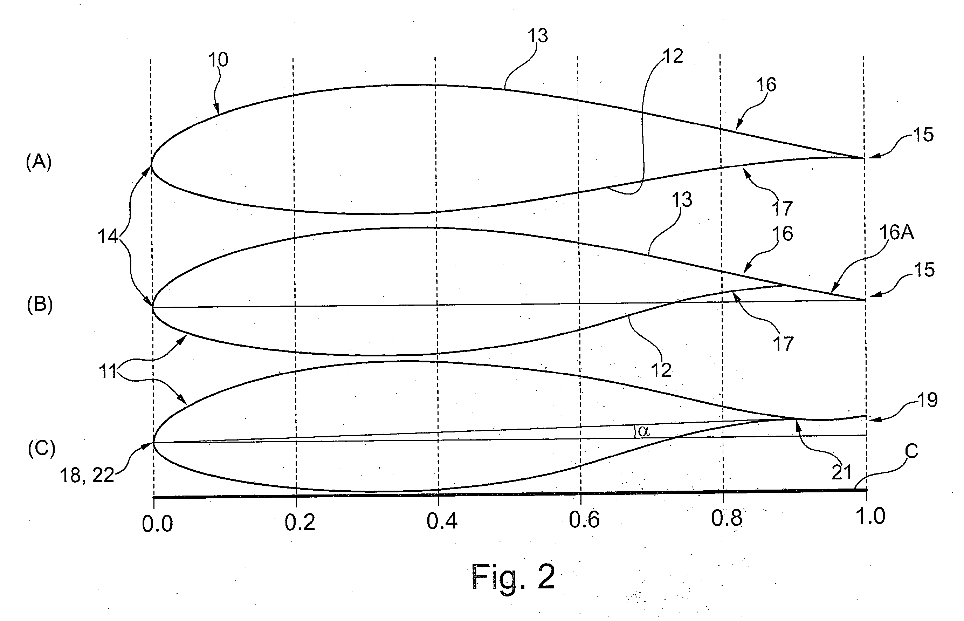

Fig. 2 shows a cross-sectional profile of a conventional wind turbine blade 10 and a wind turbine blade 11 according to the invention. The wind turbine blade 10, 11 may comprise a pressure side 12 connected to a suction side 13 via a leading edge 14 and a trailing edge 15. The wind turbine blade 10, 11 may comprise a first shell part 16 and a second shell part 17, wherein the first shell part 16 may have a first leading edge 18 connected to a first trailing edge 19 via a first inner surface 20a. The second shell part 17 may comprise a second trailing edge 21 connected to a second leading edge 22 via a second inner surface 20b. The inner surfaces 20 face each other when two shell parts 16, 17 are assembled during production. The outer surface of the first shell part 16 may form the suction side 13 of the wind turbine blade 10, 11. The outer surface of the second shell part 17 may form the pressure side 12 of the wind turbine blade 10, 11.

In the conventional wind turbine blade 10, as shown in fig. 2A, the two shell parts 16, 17 may be coupled together at the leading edge 14 and at the trailing edge 15. The glued region at the trailing edge 15 may then be grinded or polished into the desired profile of the trailing edge 15 in a time consuming process.

The wind turbine blade 11 shown in figs. 2B-C may comprise a trailing edge 15 that is defined by the trailing edge 19 of the first shell part 16. The first shell part 16 may comprise an extended shell section 16A that is defined by the two trailing edges 19, 21. The trailing edge 21 of the second shell part 17 may be placed in a retracted position where it may be coupled to the inner surface 20a of the first shell part 16, e.g. via a glue line located on the inner surface 20a.

The extended shell section 16A may be configured as a flexible shell section that it is configured to significantly flex when the incoming wind is acting on it. The extended shell section 16A may be configured for load reduction where it may flex between a first position, as shown in fig. 2B, and a second position, as shown in fig. 2C, in a direction towards the suction side 13 relative to the leading edge 14.

Fig. 2B shows the extended shell section 16A in an unloaded situation where it may have an initial shape where there is a minimum loading on the shell section 16A. The extended shell section 16A may have a straight profile having a relative width of at least 0.10, preferably between 0.10 and 0.30, based on the relative chord length of the wind turbine blade 11 which has a relative chord length of 1. The relative chord length between the leading edge 14 and the retracted trailing edge 21 may be 0.90 or less, preferably between 0.70 and 0.90.

The extended shell section 16A may have a thickness which more or less corresponds to the thickness of the laminate forming that shell section 16A. The extended shell section 16A may have a constant thickness along its width or it may be tapered towards the trailing edge 19. The laminate may have a thickness up to 3 mm at the trailing edge 21 which may be tapered down to 1 mm or less at the trailing edge 19.

Fig. 2C shows the extended shell section 16A in a loaded situation where it may have a significantly deformed shape where there is a greater or a maximum loading on the shell section 16A. The flexing of the trailing edge 19 may be defined as the angular rotation α of the chord line C between a first position and a second position relative to the leading edge 14 of the wind turbine blade. The extended shell section 16A may be configured to flex up to 5 degrees in a positive or even negative direction relative to its initial shape. The flexing of the shell section 16A may depend on the angle of attack on the blade profile. This configuration allows the lift coefficient of the blade profile to be reduced at high wind speeds and increased at low wind speeds. The extended shell section 16A may be made of a material or laminate having a lower stiffness than the remaining blade profile of the wind turbine blade 11.

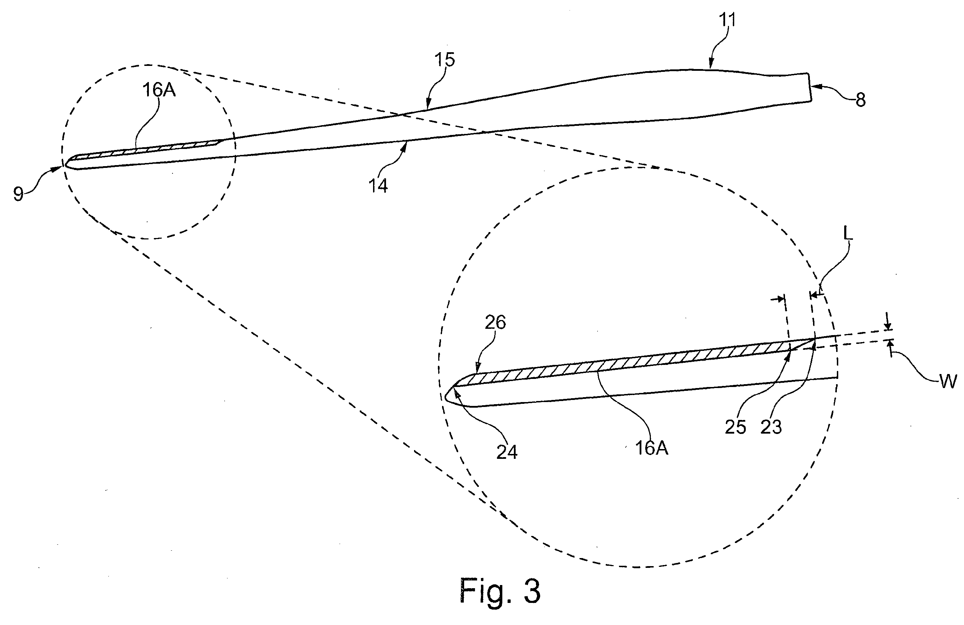

Fig. 3 shows an exemplary embodiment of the wind turbine blade 11 according to the invention. The wind turbine blade 11 may have an optimised aerodynamic blade profile along the length of the wind turbine blade, as shown in fig. 3. The extended shell section 16A may be located towards the tip end 9, as shown in the enlarged image in fig. 3. The extended shell section 16A may comprise a first point 23 facing the blade root 8 at which the extended shell section 16A is introduced onto the wind turbine blade 11. The extended shell section 16A may be extended along the length of the wind turbine blade 11 and may comprise a second point 24 facing the tip end 9 at which the extended shell section 16A may be tapered off. The wind turbine blade 11 may have a relative length of 1 and the extended shell section 16A may have a relative length of 0.40 or less.

The extended shell section 16A may at the point 23 be shaped so that the profile of that shell section 16A is gradually introduced towards a first intermediate point 25 facing the tip end 9. The relative width of the extended shell section 16A may between these two points 23, 25 form a slope between 1:5 and 1:15 relative to the trailing edge 15. The slope may be selected based on the width W of the extended shell section 16A and the length L between the point 23 and the intermediate point 25. The point 23 may be located at a relative distance of 0.60 or more from the blade root 8.

The point 24 may be located at the tip end 9 of the wind turbine blade 11. The extended shell section 16A may at the point 24 be shaped so that the profile of that shell section 16A is tapered off from a second intermediate point 26 and towards the point 24. The intermediate point 26 may face the blade root 8. The extended shell section 16A may maintain its maximum relative width between the two intermediate points 25, 26.

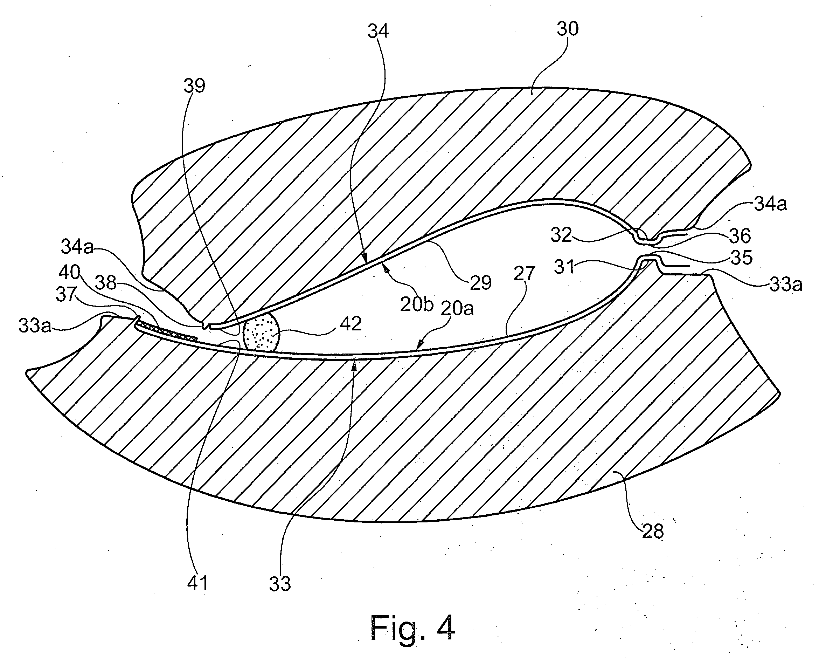

Fig. 4 shows an exemplary embodiment of a manufacturing process for the wind turbine blade 11. In a first step, a first set of layers (not shown) forming a laminate 27 may be arranged in a first mould 28 and a second set of layers (not shown) forming a laminate 29 may be arranged in a second mould 30. The two laminates 27, 29 define the first and second shell parts 16, 17, as shown in fig. 2. The layers may be made of fibre reinforced plastics or composites in which the fibres are organic fibres or made of glass or carbon.

One or both moulds 28, 30 may comprise at least one protrusion 31, 32 extending outwards from an outer surface 33, 34 of the mould 28, 30. The protrusion 31, 32 may form an elongated element extending along at least a part of the length of the mould 28, 30. The layers may be positioned over the protrusion 31, 32 so that the protrusions 31, 32 form a notch or raised area in the laminate 27, 29, as shown in fig. 4. The protrusion 31, 32 may have a height that is equal to or greater than the thickness of the laminate 27, 29. The protrusion 31 on the first mould 28 may be aligned with the protrusion 32 on the second mould 30. The raised areas may define two gluing surfaces 35, 36 facing each other which are arranged at the leading edges 18, 22 of the two shell parts 16, 17.

Another protrusion 37, 38 may be arranged at the opposite end of one or both moulds 28, 30 and extending outwards from the outer surface 33, 34 of the mould 28, 30. The protrusion 36, 37 may form an elongated element extending along at least a part of the length of the mould 28, 30. The layers may be placed adjacent the protrusion 37, 38 or alternatively over the protrusions 37, 38 so that they form a notch in the laminate 27, 29. The protrusion 37 on the first mould 28 may be offset relative to the protrusion 38 on the second mould 30 so that the first shell part 16 forms an extended shell section, as shown in fig. 2B. The protrusion 37, 38 may have a height that is equal to or less than the thickness of the laminate 27, 29. The protrusions 37, 38 may be arranged at the trailing edge 19, 21 of the shell part 16, 17. A gluing surface 39 may be arranged adjacent to the trailing edge 21 on the inner surface 23.

The laminates 27, 29 may in a second step be infused using a resin, e.g. epoxy, supplied by an external system (not shown), e.g. a vacuum infusion system. The resin may be distributed over the surface of the laminate 27, 29 through an arrangement of pipes or hoses coupled to the external system. The arrangement of pipes or hoses may be removed when the resin is cured.

At least one non-bonding layer 40 may be arranged on the inner surface 20a of the first shell part 16, i.e. on the extended shell section, in a third step. The non-bonding layer 40 may be placed adjacent to or near the trailing edge 19. The non-bonding layer 40 may be arranged to mask off a gluing surface 41 on the surface 20a which faces the gluing surface 39. The non-bonding layer 40 may be a layer of a peel-ply material, e.g. a fibre reinforced fabric or nylon fabric coated with a release agent, such as Teflon™. The peel-ply layer 40 may be shaped as an elongated flat element, e.g. a tape, which may be pre-manufactured or cut into the desired width and then applied to the surface 20a. Another non-bonding layer (not shown) may be arranged on an external surface 33a, 34a adjacent to one or more of the protrusions 31, 32, 37, 38.

A deformable element 42, e.g. a foam element, may be arranged on the opposite side of and adjacent to the gluing surface 41. The deformable element 42 may comprise a plurality of open or closed cells that allows the element 42 to deform when subjected to an extern pressure. The deformable element 42 may have a size and shape that is greater than the internal thickness and/or volume formed between the two shell parts 16, 17 at that location. The element 42 may then deform, i.e. buckle or deform in-plane as shown in fig. 4, when the two shell parts 16, 17 are pressed together.

At least one layer of an adhesive (not shown), e.g. a glue, may be applied to one of the gluing surfaces 35, 36 and one of the gluing surfaces 39, 41, preferably to the gluing surfaces 35, 41 of the first shell part 16. The adhesive may have a high viscosity and a high bonding capacity to the laminate 27, 29, such as epoxy.

The second shell part 17 may then be arranged over and aligned with the first shell part 16 in a fourth step. The two shell parts 16, 17 may then be brought into contact with each other so that the gluing surfaces 35, 36, 39, 41 are pressed together. Any excess adhesive may then be pressed out at least onto the non-bonding layer 40 and - onto the excess material at the leading edge 18, 22 or the non-bonding layer thereof.

Any excess adhesive which is pressed out between the gluing surfaces 39, 41 and onto the non-bonding layer 40 may be removed in a fifth step by peeling off the non-bonding layer 40. This is preferably done after demoulding the two shell parts 16, 17 and before the adhesive has completely cured.

The glued region left behind by the non-bonding layer at the trailing edge 21 may be manually grinding or polishing into a smooth transition with a minimal effort in a sixth step, if needed. Thereby reducing the workload needed to work the surface into its final shape since it does not have to be worked into a thin profile like a conventional trailing edge.

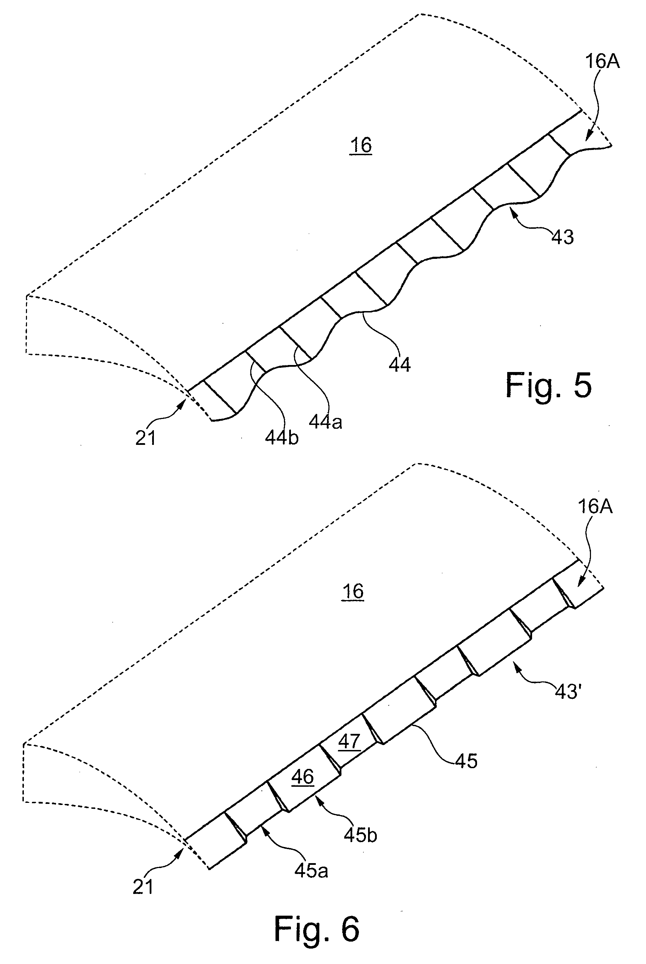

Fig. 5 shows the extended shell section 16A with a first exemplary embodiment of a noise reduction profile 43. The noise reduction profile 43 may be arranged along the length of the extended shell section 16A, as shown in fig. 5.

The laminate 27 of the first shell part 16 may during lay-up be shaped into a noise reducing profile 43 at the trailing edge 19. The laminate 27 may be arranged so that the trailing edge 19 forms a sinus shaped edge 44. The peaks 44a, 44b of the trailing edge 44 may face in opposite directions and are preferably arranged out-of-plane relative to the profile of the extended shell section 16A. The noise reducing profile 43 may form a predetermined number of curves or waves extending parallel to the chord C. The amplitude of the peaks 44a, 44b may be tapered off from the trailing edge 44 towards the trailing edge 21. This allows the noise reduction profile 43 to be integrated into the shell parts 16, 17 so that they are manufactured in the same step, thus reducing the total manufacturing time.

Fig. 6 shows the extended shell section 16A with a second exemplary embodiment of the noise reduction profile 43. The noise reduction profile differs from the profile 43 shown in fig. 5 by having a stepped profile 43' instead.

The laminate 27 may during lay-up be arranged so that the trailing edge 19 forms a stepped edge 45. The peaks 45a, 45b of the trailing edge 45 may face in opposite directions and are preferably arranged out-of-plane relative to the profile of the extended shell section 16A. The noise reducing profile 43' may form a predetermined number of areas 46, 47 that are offset relative to each other, e.g. one area 46 that are offset towards the pressure side 12 and an adjacent area 47 that are offset towards the suction side 13. The areas 46, 47 may have a predetermined length and width and may be placed in a predetermined positive or negative angle relative to the trailing edge 21. The transition surface between two adjacent areas 46, 47 may be configured to form a smooth transition.

## Claims

1. A wind turbine (1) comprising:
- a wind turbine tower (2) having a top;
- a nacelle (3) coupled to the top of the wind turbine tower (2), e.g. via a yaw system;
- a rotor hub (4) rotatably mounted to the nacelle (3);
- one or more wind turbine blades (5) having a tip end (9) located in the opposite end of a blade root (8) configured to be mounted to the rotor hub (4), where the wind turbine blade (5, 11) comprises a pressure side (12) connected to a suction side (13) via a leading edge (18, 22), wherein the wind turbine blade (5, 11) further comprises a first shell part (16) having a first trailing edge (19) connected to a first inner surface (20a) facing a second shell part, wherein the second shell part (17) has a second trailing edge (21) connected to a second inner surface (20b) facing the first shell part, wherein the second trailing edge (21) of the second shell part (17) is coupled to the first inner surface (20a) of the first shell part (16) so that the first shell part (16) forms an extended shell section (16A) where the first trailing edge (19) of the first shell part (16) defines the trailing edge (15) of the wind turbine blade,
**characterised in that**
- the extended shell section (16A) is configured as a flexible shell section for passive load reduction at variable wind speeds where the first trailing edge (19) is configured to move from a first position to a second position in a direction towards the suction side relative to the first leading edge (14) when an incoming wind is acting on the pressure side (12) of the wind turbine blade (11), and
- wherein the chord (C) of the wind turbine blade has a relative length of 1 and the extended shell section (16A) has a relative width of at least 0.10, and wherein the extended shell section (16A) has a continuous profile along the length of the wind turbine blade.

2. A wind turbine according to claim 1, **characterised in that** the extended shell section (16A) has a relative width between 0.10 and 0.30.

3. A wind turbine according to claim 1 or 2, **characterised in that** the wind turbine blade (11) has a relative length of 1 measured between the blade root and the tip end and the extended shell section (16A) is located towards the tip end (9), wherein the extended shell section has a starting point (23) facing the blade root (8) and an end point (24) facing the tip end, where the starting point (23) is preferably located at a relative distance of 0.60 or more from the blade root.

4. A wind turbine according to claim 3, **characterised in that** the relative width (W) of the extended shell section increases gradually from the starting point (23) in a direction towards the tip end (9) until an intermediate point (25), after which the extended shell section (16A) maintains its maximum relative width, preferably the slope of the increasing extended shell section (16A) between these two points is between 1:5 and 1:15.

5. A wind turbine according to any one of claims 1 to 4, **characterised in that** the chord (C) of the wind turbine blade (11) is configured to move within a maximum angular interval (α) of ±5 degrees, preferably ±2 degrees, between the first position and the second position, and where the angular rotation (α) is measured relative to the leading edge (14) of the wind turbine blade (11).

6. A wind turbine according to any one of claims 1 to 5, **characterised in that** the extended shell section (16A) forms part of the shell part (17) forming the pressure side (12) or the shell part (16) forming the suction side (13).

7. A wind turbine according to any one of claims 1 to 6, **characterised in that** the profile of the extended shell section (16A) is further configured for noise reduction, e.g. comprises a noise reducing profile arranged at the outermost trailing edge (19) of the extended shell section (16A) which differs from the profile at the innermost trailing edge (21) of the extended shell section (16A).

8. A wind turbine according to claim 7, **characterised in that** the outermost trailing edge (19) of the noise reducing profile forms a serrated edge, a sinus shaped edge, or a stepped edge, wherein two adjacent peaks of that edge face in opposite directions and are preferably arranged in-plane or out-of-plane relative to the profile of the extended shell section (16A).

9. A wind turbine according to any one of claims 1 to 8, **characterised in that** the extended shell section (16A) comprises a laminate of at least two layers comprising a plurality of fibres, wherein the fibres in one of the layers are arranged in a first axial direction, e.g. +45 degrees, relative to the length of the extended shell section (16A) and the fibres in the other layer are arranged in a second axial direction, e.g. -45 degrees, relative to the length of the extended shell section (16A).

10. A manufacturing method for a wind turbine blade according to any one of claims 1 to 9, where the method comprising the steps of:
- arranging a first set of layers in a first mould (28), where the layers form a laminate (27) defining a first shell part (16) comprising a first inner surface (20a) connected to a first outer surface via a first and second edges (19, 21);
- arranging a second set of layers in a second mould (30), where the layers form a laminate (29) defining a second shell part (17) comprising a second inner surface (20b) connected to a second outer surface via a third and fourth edges (18, 22);
- infusing a resin, e.g. epoxy, into the laminates (27, 29) using an external infusion system, e.g. a vacuum infusion system, and curing the infused laminates (27, 29), and removing the external infusion system **characterised by**
- applying at least one non-bonding layer (40) to one of the two surfaces (20a) of the first shell part (16) adjacent to one of the two edges (19) of that shell part, where the layer (40) is arranged to mask off a first gluing surface (41) on that surface for gluing to a second gluing surface (39) on the second shell part (19);
- applying at least one adhesive layer, e.g. glue, to the first gluing surface (41); and
- moving the second shell part (17) into contact with the first shell part (16), e.g. placing the second shell part (17) on top of the first shell part (16), so that the second gluing surface (39) is brought into contact with the glue on the first gluing surface (41), wherein the non-bonding layer (40) is located outside the enclosed area defined by the two shell parts (16, 17).

11. A manufacturing method according to claim 10, **characterised by** the method comprises an additional step of:
- removing any excess adhesive, which is pressed out between the two gluing surfaces (39, 41) and onto the non-bonding layer (40), by removing, e.g. peeling off, the non-bonding layer (40), preferably after demoulding the two shell parts.

12. A manufacturing method according to claim 10 or 11, **characterised by** a deformable element (42), e.g. a foam element, or a second removable non-bonding layer is arranged on the opposite adjacent side of the first gluing surface (41) before bringing the two shell parts (16, 17) into contact with each other.

13. A manufacturing method according to any one of claims 10 to 12, **characterised by** either at least one of the moulds (28, 30) comprises at least one protrusion (37, 38) defining a lay-up marking, where one of the edges (19, 21), e.g. the trailing and/or leading edge, of the laminate (27, 29) is arranged adjacent to the protrusion (37, 38), or wherein a second element, e.g. a deformable element, is arranged on one of surfaces (34a) of the two moulds (30) for masking off the second gluing surface (39) before bringing the two shell parts (16, 17) into contact with each other.

14. A manufacturing method according to any one of claims 10 to 13, **characterised by** at least a portion of the non-bonding layer (40) is arranged between a first trailing edge (19) of the first shell part (16) and the first gluing surface (41), and where the second gluing surface (39) is arranged adjacent to a second trailing edge (21) of the second shell part (17).

15. A manufacturing method according to any one of claims 10 to 14, **characterised by** the laminate (27) of one of the shell parts (16) is in a section (16A) adjacent to the trailing edge (19) of that shell part arranged for noise reduction, e.g. forms a noise reducing profile.

## Patentansprüche

1. Windturbine (1), umfassend:
- einen Windturbinenturm (2) mit einer Oberseite;
- eine Gondel (3), die mit der Oberseite des Windturbinenturms (2) verbunden ist, z. B. durch ein Azimutsystem;
- eine Rotornabe (4), die drehbar an der Gondel (3) befestigt ist;
- eine oder mehrere Windturbinenschaufeln (5), die ein Spitzenende (9) aufweist/aufweisen, das in dem gegenüberliegenden Ende einer Rotorschaufel (8) angeordnet ist, die derart konfiguriert ist, dass sie an der Rotornabe (4) befestigt wird, wobei die Windturbinenschaufel (5, 11) eine Druckseite (12) umfasst, die über eine Vorderkante (18, 22) mit einer Ansaugseite (13) verbunden ist, wobei die Windturbinenschaufel (5, 11) ferner einen ersten Schalenteil (16) umfasst, der eine erste Hinterkante (19) aufweist, die mit einer inneren Oberfläche (20a) verbunden ist, welche einem zweiten Schalenteil zugewandt ist, wobei der zweite Schalenteil (17) eine zweite Hinterkante (21) aufweist, die mit einer zweiten inneren Oberfläche (20b) verbunden ist, welche dem ersten Schalenteil zugewandt ist, wobei die zweite Hinterkante (21) des zweiten Schalenteils (17) mit der ersten inneren Oberfläche (20a) des ersten Schalenteils (16), sodass der erste Schalenteil (16) einen erweiterten Schalenabschnitt (16A) bildet, wobei die erste Hinterkante (19) des ersten Schalenteils (16) die Hinterkante (15) der Windturbinenschaufel definiert,
**dadurch gekennzeichnet, dass**
- der erweiterte Schalenabschnitt (16A) als flexibler Schalenabschnitt zur passiven Lastabsenkung bei variablen Windgeschwindigkeiten konfiguriert ist, wobei die erste Hinterkante (19) derart konfiguriert ist, dass sie sich aus einer ersten Position in eine zweite Position in Richtung der Ansaugseite in Bezug auf die erste Hinterkante (14) bewegt, wenn ein eingehender Wind auf die Druckseite (12) der Windturbinenschaufel (11) einwirkt, und
- wobei die Sehne (C) der Windturbinenschaufel eine relative Länge von 1 aufweist und der erweiterte Schalenabschnitt (16A) eine relative Breite von mindestens 0,10 aufweist und wobei der ausgedehnte Schalenabschnitt (16A) ein durchgehendes Profil entlang der Länge der Windturbinenschaufel aufweist.

2. Windturbine nach Anspruch 1, **dadurch gekennzeichnet, dass** der erweiterte Schalenabschnitt (16A) eine relative Breite zwischen 0,10 und 0,30 aufweist.

3. Windturbine nach Anspruch 1 oder 2, **dadurch gekennzeichnet, dass** die Windturbinenschaufel (11) eine zwischen dem Schaufelursprung und dem Spitzenende gemessene relative Länge von 1 aufweist und der erweiterte Schaufelabschnitt (16A) in Richtung des Spitzenendes (9) angeordnet ist, wobei der erweiterte Schalenabschnitt einen Anfangspunkt (23), der der Schaufelwurzel zugewandt ist (8), und einen Endpunkt (24), der dem Spitzenende zugewandt ist, aufweist, wobei der Anfangspunkt (23) vorzugsweise in einer relativen Entfernung von 0,60 oder mehr von dem Schaufelursprung angeordnet ist.

4. Windturbine nach Anspruch 3, **dadurch gekennzeichnet, dass** sich die relative Breite (W) des ausgedehnten Schalenabschnitts von dem Ausgangspunkt (23) zunehmend in Richtung des Spitzenendes (9) bis zu einem Zwischenpunkt (25) vergrößert, nach dem der ausgedehnte Schalenabschnitt (16A) seine maximale relative Breite beibehält, wobei die Neigung des sich vergrößernden erweiterten Schalenabschnitts (16A) zwischen diesen zwei Punkten vorzugsweise zwischen 1:5 und 1:15 liegt.

5. Windturbine nach einem der Ansprüche 1 bis 4, **dadurch gekennzeichnet, dass** die Sehne (C) der Windturbinenschaufel (11) derart konfiguriert ist, dass sie sich innerhalb eines maximalen Winkelintervalls (α) von ± 5 Grad, vorzugsweise ± 2 Grad, zwischen der ersten Position und der zweiten Position bewegt, und wobei die Winkeldrehung (α) in Bezug auf die Vorderkante (14) der Windturbinenschaufel (11) gemessen wird.

6. Windturbine nach einem der Ansprüche 1 bis 5, **dadurch gekennzeichnet, dass** der erweiterte Schalenabschnitt (16A) einen Teil des die Druckseite (12) bildenden Schalenteils (17) oder des die Ansaugseite (13) bildenden Schalenteils (16) bildet.

7. Windturbine nach einem der Ansprüche 1 bis 6, **dadurch gekennzeichnet, dass** das Profil des erweiterten Schalenabschnitts (16A) ferner zur Lärmminderung konfiguriert ist, z. B. ein Lärmminderungsprofil umfasst, das an der äußersten Hinterkante (19) des erweiterten Schalenabschnitts (16A) angeordnet ist und sich von dem Profil an der innersten Hinterkante (21) des erweiterten Schalenabschnitts (16A) unterscheidet.

8. Windturbine nach Anspruch 7, **dadurch gekennzeichnet, dass** die äußerste Hinterkante (19) des Lärmminderungsprofils eine gezahnte Kante, eine sinusförmige Kante oder eine gestufte Kante bildet, wobei zwei aneinandergrenzende Höhepunkte der Kante in unterschiedliche Richtungen gewandt sind und vorzugsweise innerhalb der Ebene oder außerhalb der Ebene in Bezug auf das Profil des erweiterten Schalenabschnitts (16A) angeordnet sind.

9. Windturbine nach einem der Ansprüche 1 bis 8, **dadurch gekennzeichnet, dass** der erweiterte Schalenabschnitt (16A) ein Laminat aus mindestens zwei Schichten umfasst, das eine Mehrzahl von Fasern umfasst, wobei die Fasern in einer der Schichten in einer ersten axialen Richtung, z. B. +45 Grad, in Bezug auf die Länge des erweiterten Schalenabschnitts (16A) angeordnet sind und die Fasern in der anderen Schicht in einer zweiten axialen Richtung, z. B. -45 Grad, in Bezug auf die Länge des erweiterten Schalenabschnitts (16A) angeordnet sind.

10. Herstellungsverfahren für eine Windturbinenschaufel nach einem der Ansprüche 1 bis 9, wobei das Verfahren die folgenden Schritte umfasst:
- Anordnen einer ersten Gruppe von Schichten in einer ersten Gussform (28), wobei die Schichten ein Laminat (27) bilden, das einen ersten Schalenteil (16) definiert, umfassend eine erste innere Oberfläche (20a), die über eine erste und eine zweite Kante (19, 21) mit einer ersten äußeren Oberfläche verbunden ist;
- Anordnen einer zweiten Gruppe von Schichten in einer zweiten Gussform (30), wobei die Schichten ein Laminat (29) bilden, das einen zweite Schalenteil (17) definiert, umfassend eine zweite innere Oberfläche (20b), die über eine dritte und eine vierte Kante (18, 22) mit einer zweiten äußeren Fläche verbunden ist;
- Eingießen eines Harzes, z. B. Epoxy, in die Laminate (27, 29) unter Verwendung eines externen Eingießsystems, z. B. eines Vakuumeingießsystems, und Aushärten der eingegossenen Laminate (27, 29) und Entfernen des externen Eingießsystems, **gekennzeichnet durch**
- Auftragen mindestens einer nichtbindenden Schicht (40) auf einer der zwei Oberflächen (20a) des ersten Schalenteils (16), die an eine der zwei Kanten (19) des Schalenteils angrenzt, wobei die Schicht (40) derart angeordnet wird, dass sie eine erste Klebeoberfläche (41) auf dieser Oberfläche verdeckt, um sich an eine zweite Klebeoberfläche (39) an dem zweiten Schalenteil (19) zu kleben;
- Auftragen mindestens einer Haftschicht, z. B. Klebstoff, auf die erste Klebeoberfläche (41); und
- Bewegen des zweiten Schalenteils (17) in Kontakt mit dem ersten Schalenteil (16), z. B. Platzieren des zweiten Schalenteils (17) auf dem ersten Schalenteil (16), sodass die zweite Klebeoberfläche (39) in Kontakt mit dem Klebstoff auf der ersten Klebeoberfläche (41) gebracht wird, wobei die nichtbindende Schicht (40) außerhalb der eingeschlossenen Fläche angeordnet wird, die von den zwei Schalenteilen (16, 17) definiert wird.

11. Herstellungsverfahren nach Anspruch 10, **dadurch gekennzeichnet, dass** das Verfahren einen zusätzlichen Schritt umfasst:
- Entfernen von überschüssigem Haftmittel, das zwischen den zwei Klebeoberflächen (39, 41) heraus und auf die nichtbindende Schicht (40) gepresst wird, indem die nichtbindende Schicht (40) vorzugsweise nach dem Entformen der zwei Schalenteile entfernt, z. B. abgezogen, wird.

12. Herstellungsverfahren nach Anspruch 10 oder 11, **dadurch gekennzeichnet, dass** ein verformbares Element (42), z. B. ein Schaumelement, oder eine zweite entfernbare nichtbindende Schicht auf der gegenüberliegenden angrenzenden Seite der ersten Klebeoberfläche (41) angeordnet wird, bevor die zwei Schalenteile (16, 17) miteinander in Kontakt gebracht werden.

13. Herstellungsverfahren nach einem der Ansprüche 10 bis 12, **dadurch gekennzeichnet, dass** entweder mindestens eine der Gussformen (28, 30) mindestens einen Vorsprung (37, 38) umfasst, der eine Laminierungsmarkierung definiert, wobei eine der Kanten (19, 21), z. B. die Hinter- und/oder Vorderkante, des Laminats (27, 29) an den Vorsprung (37, 38) angrenzend angeordnet wird, oder wobei ein zweites Element, z. B. ein verformbares Element, an einer der Oberflächen (34a) der zwei Gussformen (30) zum Verdecken der zweiten Klebeoberfläche (39) angeordnet wird, bevor die zwei Schalenteile (16,17) miteinander in Kontakt gebracht werden.

14. Herstellungsverfahren nach einem der Ansprüche 10 bis 13, **dadurch gekennzeichnet, dass** mindestens ein Teil der nichtbindenden Schicht (40) zwischen einer ersten Hinterkante (19) des ersten Schalenteils (16) und der ersten Klebeoberfläche (41) angeordnet wird, und wobei die zweite Klebeoberfläche (39) an eine zweite Hinterkante (21) des zweiten Schalenteils (17) angrenzend angeordnet wird.

15. Herstellungsverfahren nach einem der Ansprüche 10 bis 14, **dadurch gekennzeichnet, dass** sich das Laminat (27) eines der Schalenteile (16) in einem Abschnitt (16A) befindet, der an die Hinterkante (19) des Schalenteils angrenzt, der zur Lärmminderung angeordnet ist, z. B. ein Lärmminderungsprofil bildet.

## Revendications

1. Éolienne (1) comprenant :
- une tour d'éolienne (2) ayant une partie supérieure ;
- une nacelle (3) couplée à la partie supérieure de la tour d'éolienne (2), par exemple via un système d'orientation ;
- un moyeu de rotor (4) monté de manière rotative sur la nacelle (3) ;
- une ou plusieurs pales d'éolienne (5) ayant une extrémité en pointe (9) située à l'extrémité opposée d'un pied de pale (8) configuré pour être monté sur le moyeu de rotor (4), où la pale d'éolienne (5, 11) comprend un intrados (12) relié à un extrados (13) via un bord d'attaque (18, 22), dans laquelle la pale d'éolienne (5, 11) comprend en outre une première partie de coque (16) ayant un premier bord de fuite (19) relié à une première surface interne (20a) faisant face à une deuxième partie de coque, dans laquelle la deuxième partie de coque (17) a un deuxième bord de fuite (21) relié à une deuxième surface interne (20b) faisant face à la première partie de coque, dans laquelle le deuxième bord de fuite (21) de la deuxième partie de coque (17) est couplé à la première surface interne (20a) de la première partie de coque (16) de sorte que la première partie de coque (16) forme une section de coque étendue (16A) où le premier bord de fuite (19) de la première partie de coque (16) définit le bord de fuite (15) de la pale d'éolienne,
**caractérisée en ce que**
- la section de coque étendue (16A) est configurée comme une section de coque souple pour la réduction de charge passive à des vitesses de vent variables où le premier bord de fuite (19) est configuré pour se déplacer d'une première position à une deuxième position dans une direction vers l'extrados par rapport au premier bord d'attaque (14) lorsqu'un vent arrivant agit sur l'intrados (12) de la pale d'éolienne (11), et
- dans lequel la corde (C) de la pale d'éolienne a une longueur relative de 1 et la section de coque étendue (16A) a une largeur relative d'au moins 0,10, et dans laquelle la section de coque étendue (16A) a un profil continu le long de la longueur de la pale d'éolienne.

2. Éolienne selon la revendication 1, **caractérisée en ce que** la section de coque étendue (16A) a une largeur relative entre 0,10 et 0,30.

3. Éolienne selon la revendication 1 ou 2, **caractérisée en ce que** la pale d'éolienne (11) a une longueur relative de 1 mesurée entre le pied de pale et l'extrémité en pointe et la section de coque étendue (16A) est située vers l'extrémité en pointe (9), dans laquelle la section de coque étendue a un point de départ (23) faisant face au pied de pale (8) et un point d'extrémité (24) faisant face à l'extrémité en pointe, où le point de départ (23) est de préférence situé à une distance relative de 0,60 ou plus à partir du pied de pale.

4. Éolienne selon la revendication 3, **caractérisée en ce que** la largeur relative (W) de la section de coque étendue augmente progressivement du point de départ (23) dans une direction vers l'extrémité en pointe (9) jusqu'à un point intermédiaire (25), après lequel la section de coque étendue (16A) maintient sa largeur relative maximale, de préférence la pente de la section de coque étendue croissante (16A) entre ces deux points est entre 1:5 et 1:15.

5. Éolienne selon l'une quelconque des revendications 1 à 4, **caractérisée en ce que** la corde (C) de la pale d'éolienne (11) est configurée pour se déplacer à l'intérieur d'un intervalle angulaire maximum (α) de ±5 degrés, de préférence ±2 degrés, entre la première position et la deuxième position, et où la rotation angulaire (α) est mesurée par rapport au bord d'attaque (14) de la pale d'éolienne (11).

6. Éolienne selon l'une quelconque des revendications 1 à 5, **caractérisée en ce que** la section de coque étendue (16A) fait partie de la partie de coque (17) formant l'intrados (12) ou de la partie de coque (16) formant l'extrados (13).

7. Éolienne selon l'une quelconque des revendications 1 à 6, **caractérisée en ce que** le profil de la section de coque étendue (16A) est configurée en outre pour la réduction de bruit, par exemple comprend un profil de réduction de bruit agencé au niveau du bord de fuite le plus à l'extérieur (19) de la section de coque étendue (16A) qui diffère du profil au bord de fuite le plus à l'intérieur (21) de la section de coque étendue (16A)

8. Éolienne selon la revendication 7, **caractérisée en ce que** le bord de fuite le plus à l'extérieur (19) du profil de réduction de bruit forme un bord dentelé, un bord en forme de sinus, ou un bord étagé, dans laquelle deux pics adjacents de ce bord sont orientés dans des directions opposées et sont agencés de préférence en plan ou hors plan par rapport au profil de la section de coque étendue (16A).

9. Éolienne selon l'une quelconque des revendications 1 à 8, **caractérisée en ce que** la section de coque étendue (16A) comprend un stratifié d'au moins deux couches comprenant une pluralité de fibres, dans laquelle les fibres dans une des couches sont agencées dans une première direction axiale, par exemple +45 degrés, par rapport à la longueur de la section de coque étendue (16A) et les fibres dans l'autre couche sont agencées dans une deuxième direction axiale, par exemple-45 degrés, par rapport à la longueur de la section de coque étendue (16A).

10. Procédé de fabrication d'une pale d'éolienne selon l'une quelconque des revendications 1 à 9, où le procédé comprend les étapes de :
- agencement d'un premier ensemble de couches dans un premier moule (28), où les couches forment un stratifié (27) définissant une première partie de coque (16) comprenant une première surface interne (20a) reliée à une première surface externe via des premier et deuxième bords (19, 21) ;
- agencement d'un deuxième jeu de couches dans un deuxième moule (30), où les couches forment un stratifié (29) définissant une deuxième partie de coque (17) comprenant une deuxième surface interne (20b) reliée à une deuxième surface externe via des troisième et quatrième bords (18, 22) ;
- infusion d'une résine, par exemple époxy, dans les stratifiés (27,29) en utilisant un système d'infusion externe, par exemple un système d'infusion à vide, et traitement des stratifiés infusés (27, 29), et retrait du système d'infusion externe
**caractérisé par**
- l'application d'au moins une couche non liante (40) à une des deux surfaces (20a) de la première partie de coque (16) adjacente à un des deux bords (19) de cette partie de coque, où la couche (40) est agencée pour masquer une première surface de collage (41) sur cette surface pour le collage à une deuxième surface de collage (39) sur la deuxième partie de coque (19) ;
- l'application d'au moins une couche adhésive, par exemple colle, sur la première surface de collage (41) ; et
- le déplacement de la deuxième partie de coque (17) en contact avec la première partie de coque (16), par exemple le placement de la deuxième partie de coque (17) sur la partie supérieure de la première partie de coque (16), de sorte que la deuxième surface de collage (39) est amenée en contact avec la colle sur la première surface de collage (41), dans lequel la couche non liante (40) est située à l'extérieur de la zone enfermée définie par les deux parties de coque (16, 17).

11. Procédé de fabrication selon la revendication 10, **caractérisé en ce que** le procédé comprend une étape supplémentaire de :
- retrait de tout adhésif excédentaire, qui sort par pression entre les deux surfaces de collage (39, 41) et sur la couche non liante (40), en retirant, par exemple pelant, la couche non liante (40), de préférence après démoulage des deux parties de coque.

12. Procédé de fabrication selon la revendication 10 ou 11, **caractérisé par** un élément déformable (42), par exemple un élément mousse, ou une deuxième couche non liante amovible est agencée sur le côté adjacent opposé de la première surface de collage (41) avant de mettre en contact l'une avec l'autre les deux parties de coque (16, 17)

13. Procédé de fabrication selon l'une quelconque des revendications 10 à 12, **caractérisé en ce qu'**au moins un des moules (28, 30) comprend au moins une saillie (37, 38) définissant un marquage d'appui, où un des bords (19, 21), par exemple le bord de fuite et/ou d'attaque, du stratifié (27, 29) est agencé de manière adjacente à la saillie (37, 38), ou dans lequel un deuxième élément, par exemple un élément déformable, est agencé sur une des surfaces (34a) des deux moules (30) pour masquer la deuxième surface de collage (39) avant de mettre en contact l'une avec l'autre les deux parties de coque (16, 17).

14. Procédé de fabrication selon l'une quelconque des revendications 10 à 13, **caractérisé en ce qu'**au moins une partie de la couche non liante (40) est agencée entre un premier bord de fuite (19) de la première couche de coque (16) et la première surface de collage (41), et où la deuxième surface de collage (39) est agencée de manière adjacente à un deuxième bord de fuite (21) de la deuxième partie de coque (17).

15. Procédé de fabrication selon l'une quelconque des revendications 10 à 14, **caractérisé en ce que** le stratifié (27) d'une des parties de coque (16) est dans une section (16A) adjacente au bord de fuite (19) de cette partie de coque agencée pour la réduction de bruit, par exemple forme un profil de réduction de bruit.
